# EUROPEAN PATENT APPLICATION

(11) **EP 4 223 594 A1**
(43) Date of publication of application: **09.08.2023**
(21) Application number: 23154912.2
(22) Date of filing: 03.02.2023
(51) Int. Cl.: B60R 5/04, B60P 7/06, B60R 21/06

(54) **BARRIER NET**

(30) Priority: 04.02.2022 SE 2250115
(71) Applicant: Klippan Safety AB, 264 21 Klippan (SE)
(72) Inventor: YLIKANGAS, Roger, 263 54 LERBERGET (SE); ROSENGREN, Daniel, 254 84 HELSINGBORG (SE); HULT, Per, 264 92 KLIPPAN (SE)
(74) Representative: Ström & Gulliksson AB

(57) **Abstract**

A barrier net (100) for separating a cargo area of a vehicle from a passenger compartment of the vehicle is presented. The barrier net (100) comprises an upper left fastening means (110L), an upper right fastening means (110R) for fastening the barrier net (100) at an upper region of the vehicle and lower fastening means (120R, 120L) for fastening the barrier net (100) at a lower region of the vehicle and an upper edge element (130) connected between the upper left fastening means (110L) and the upper right fastening means (1 10R). The barrier net (100) further comprises a first plurality of cords (155L) angled towards the upper left fastening means (110L) and a second plurality of cords (155R) angled towards the upper right fastening means (110R), wherein the first plurality of cords (155L) is arranged to form a mesh (150) by intersecting the second plurality of cords (155R), wherein an upper edge of the mesh (150) is fixed to the upper edge element (130) such that, when the mesh (150) is subjected to a force (F) perpendicular to a plane (P) of the mesh (150), a first component (F1) of the force (F) is directed towards the upper left fastening means (110L) primarily by the first plurality of cords (155L) and a second component (F2) of the force (F) is directed towards the upper right fastening means (110R) primarily by the second plurality of cords (155R).

## Description

### TECHNICAL FIELD

The present disclosure relates to barrier nets and more precisely to a barrier net for separating a cargo area of a vehicle from a passenger compartment of the vehicle.

### BACKGROUND

When transporting goods or cargo in a vehicle, there is a risk that the goods will move about the interior of the vehicle as the vehicle accelerates, turns and/or de-accelerates. This may be particular problematic in e.g. stations wagons where a cargo area of the vehicle is open with regards to a passenger compartment of the vehicle. Should the cargo start moving in the forward direction of the vehicle when the vehicle de-accelerates, i.e. brakes, the cargo may hit one of the people of the vehicle or damage the interior or windshield of the vehicle.

Typically, the passenger compartment may be protected from the cargo area by a barrier net. The most common use of a barrier net is to arrange it between the back of the rear passenger seat and the cargo area. However, a forward configuration is also commonplace wherein the barrier net is placed directly behind the front seats of the vehicle. This may be the preferred configuration when for instance the backrests of the back seats are lowered to increase a volume of the cargo area. In fact, the use of barrier net is so common that some countries have legislations making it illegal to sell cars under certain circumstances without a barrier net. These barrier nets must be cost effective and durable in order to meet legal requirements and protect passengers and the driver of a vehicle from moving cargo.

The barrier nets are subjected to stringent tests under standards such as ECE R17 and ISO 27955-2010 relating to e.g. the force they have to endure, how much they are allowed to stretch towards the driver i.e. forward displacement, etc. These requirements have to be met without the barrier net tearing or otherwise breaking.

Generally as the strength of a barrier net is increased, the bulk of and the cost of the net increases and the transparency of the net decreases.

### SUMMARY

It is in view of the above considerations and others that the various embodiments of this disclosure have been made. The present disclosure therefor recognizes the fact that there is a need for improvement of the existing art described above.

An object of the present disclosure is to provide a new type of barrier net which is improved over prior art and which eliminates or at least mitigates the drawbacks discussed above. More specifically, an object of the invention is to provide a barrier net for separating a cargo area of a vehicle from a passenger compartment of the vehicle that is more durable and capable of withstanding greater forces compared to the prior art without unduly increasing the cost of the barrier net. The barrier net of the present disclosure has a reduced forward displacement and risk of tearing. These objects are achieved by the technique set forth in the appended independent claims with preferred embodiments defined in the dependent claims related thereto.

In a first aspect, a barrier net for separating a cargo area of a vehicle from a passenger compartment of the vehicle is presented. The barrier net comprises an upper left fastening means and an upper right fastening means for fastening the barrier net at an upper region of the vehicle. The barrier net further comprises lower fastening means for fastening the barrier net at a lower region of the vehicle and an upper edge element connected between the upper left fastening means and the upper right fastening means. The barrier net further comprises a first plurality of cords angled towards the upper left fastening means and a second plurality of cords angled towards the upper right fastening means. The first plurality of cords is arranged to form a mesh by intersecting the second plurality of cords, wherein an upper edge of the mesh is fixed to the upper edge element such that, when the mesh is subjected to a force perpendicular to a plane of the mesh, a first component of the force is directed towards the upper left fastening means primarily by the first plurality of cords and a second component of the force is directed towards the upper right fastening means primarily by the second plurality of cords.

Specifically the upper edge element is beneficial as it secures the upper edge of the mesh and makes it easier to transfer forces to fastening means of the barrier net.

In one variant, the first plurality of cords and/or the second plurality of cords extend into the upper edge element at a first angle. The first angle is smaller or greater than 90 degrees. This is beneficial as the transfer of power between the cords and the edge element may be smooth with a reduced risk of cords tearing.

In one variant, the first angle is between 70 and 20 degrees. This is beneficial as the transfer of power between the cords and the edge element may be smooth with a reduced risk of cords tearing.

In one variant, the first angle is between 60 and 30 degrees. This is beneficial as the transfer of power between the cords and the edge element may be smooth with a reduced risk of cords tearing.

In one variant, the first angle is between 50 and 40 degrees. This is beneficial as the transfer of power between the cords and the edge element may be smooth with a reduced risk of cords tearing.

In one variant, the first plurality of cords is fixed to the second plurality of cords at each intersection between the first plurality of cords and the second plurality of cords. This is beneficial as the vertical and horizontal cords will more efficiently share the load of the force and the shape of the mesh will be fixed.

In one variant, the barrier net comprises a lower left fastening means and a lower right fastening means for fastening the barrier net at a lower region of the vehicle. These fastening means are beneficial as they help ensure a taut installation of the barrier net in the vehicle.

In one variant, the lower left fastening means is arranged at a lower left corner of the barrier net and the lower right fastening means is arranged at a lower right corner of the barrier net.

In one variant, the upper left fastening means is arranged at an upper left corner of the barrier net and the upper right fastening means is arranged at an upper right corner of the barrier net when the barrier net is mounted in the vehicle.

In one variant, the barrier net is a rectangular barrier net configured to be fastened to the vehicle at each of the corners of the barrier net.

In one variant, the barrier net comprises a lower edge element fixed to a lower edge of the mesh. This is beneficial as it secures the lower edge of the mesh and makes it easier to transfer forces to fastening means of the barrier net.

In one variant, the barrier net comprises a left edge element and right edge element arranged to fixedly sandwich the mesh at outer edges of the mesh along, when the barrier net is mounted in the vehicle, a vertical extension axis (V) of the barrier net. This is beneficial as it secures the horizontal edges of the mesh and makes it easier to transfer forces to fastening means of the barrier net.

In one variant, at least one of the upper edge element, the lower edge element, or the left edge element or the right edge element is flexible with regards to bending and comparably stiff with regards to stretching. This is beneficial as any extension of the cords of the barrier net is substantially limited to the longitudinal extension of the cords without any edge element significantly contributing to the forward extension of the barrier net.

In one variant, the first plurality of cords and the second plurality of cords are flexible with regards to bending and comparably stiff with regards to stretching. This is beneficial as the forward extension of the barrier net is reduced.

In one variant, the first plurality of cords intersects the second plurality of cords at an angle between 65 and 115 degrees, preferably between 80 and 100 degrees.

In one variant, the first plurality of cords and/or the second plurality of cords are configured to, when the barrier net is mounted in the vehicle, form a first angle to the horizontal extension axis of the barrier net. The first angle is between 70 and 20 degrees, preferably between 60 and 30 degrees and most preferably between 50 and 40 degrees.

In one variant, the mesh is processed to increase the rigidity of the mesh. This is beneficial at the mesh will be further prevented form deformation when subjected to the force. The processing may comprise heat treatment, curing, chemical processing and/or other processing known in the art. The processing may be performed on the whole or parts of the mesh and/or the barrier net.

In one variant, the barrier net is a foldable barrier net. This is beneficial as the barrier net will be more convenient to store.

### BRIEF DESCRIPTION OF THE DRAWINGS

These and other aspects, features and advantages will be apparent and elucidated from the following description of various embodiments; references being made to the appended diagrammatical drawings which illustrate non-limiting examples of how the concept can be reduced into practice.
Fig. 1 is a view of a prior art barrier net mounted in a vehicle;
Figs. 2a-c are views of a prior art barrier net;
Fig. 3 is a view of a barrier net according to embodiments of the present disclosure when mounted in a vehicle;
Figs. 4a-c are views of a barrier net according to embodiments of the present disclosure;
Fig. 5 is a view of a prior art barrier net;
Fig. 6 is a view of a barrier net according to embodiments of the present disclosure;
Fig. 7 is schematic view of forces acting upon a barrier net according to embodiments of the present disclosure;
Fig. 8 is a view of a barrier net according to embodiments of the present disclosure when mounted in a vehicle; and
Fig. 9 is a planar view of a large mesh for forming a barrier net according to embodiments of the present disclosure.

### DETAILED DESCRIPTION

Hereinafter, certain embodiments will be described more fully with reference to the accompanying drawings. The invention described throughout this disclosure may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

The term "coupled" is defined as connected, although not necessarily directly, and not necessarily mechanically. Two or more items that are "coupled" may be integral with each other. The terms "a" and "an" are defined as one or more unless this disclosure explicitly requires otherwise. The terms "substantially," "approximately," and "about" are defined as largely, but not necessarily wholly what is specified, as understood by a person of ordinary skill in the art. The terms "comprise" (and any form of comprise, such as "comprises" and "comprising"), "have" (and any form of have, such as "has" and "having"), "include" (and any form of include, such as "includes" and "including") and "contain" (and any form of contain, such as "contains" and "containing") are open-ended linking verbs. As a result, a method that "comprises," "has," "includes" or "contains" one or more steps possesses those one or more steps, but is not limited to possessing only those one or more steps.

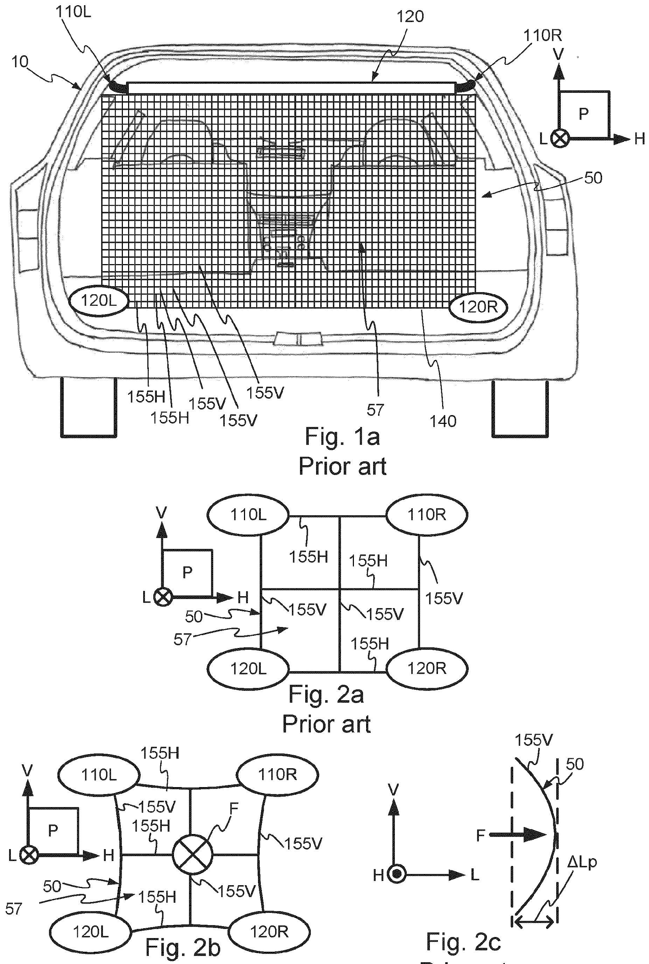

With reference to Fig. 1a, a prior art barrier net 50 will be presented. The prior art barrier net 50 is adapted to separate a cargo area of a vehicle 10 from a passenger compartment of the vehicle 10. The prior art barrier net 50 is configured to be mounted vertically in the vehicle 10. The prior art barrier net 50 comprises an upper left fastening means 110L and an upper right fastening means 110R for fastening the prior art barrier net 50 at a (vertically) upper region of the vehicle 10. Corresponding lower fastening means 120R, 120L for fastening a lower end of the prior art barrier net 50 to a lower region of the vehicle are generally also provided. The prior art barrier net 50 is, when mounted in the vehicle 10, substantially planar along a plane P of the prior art barrier net 50 described by a horizontal axis H and a vertical axis V of the vehicle 10, which are the same for the prior art barrier net 50 when the prior art barrier net 50 is mounted in the vehicle 10. As seen in Fig. 1a, the prior art barrier net 50 is shown from the cargo area of the vehicle 10 looking along a longitudinal axis L of the vehicle 10.

The prior art barrier net 50 comprises a plurality of horizontal cords 155H and a plurality of vertical cords 155V. For simplicity, in Fig. 1a, only a few of the plurality of cords 155H, 155V are marked and indexed. The plurality of horizontal cords 155H and the plurality of vertical cords 155V intersect to form a prior art mesh 57. The prior art mesh 57 may be described as the net, or netting of the prior art barrier net 50.

In Fig. 2a, an extreme simplification of the prior art barrier net 50 is shown. The prior art barrier net 50 illustrated in Fig. 2a only comprises three vertical cords 155V and three horizontal cords 155H and is attached to the vehicle 10 (not shown in Fig. 2a) by the upper left fastening means 110L, the upper right fastening means 110R, a lower left fastening means 120L and a lower right fastening means 120R. In Fig. 2a, the prior art barrier net 50 is shown looking into the plane P of the vehicle 10, i.e. looking into through the cargo area into the passenger compartment along the longitudinal axis L of the vehicle 10.

In Fig. 2b, the prior art barrier net 50 is subjected to a force F directed along the longitudinal axis L towards the passenger compartment of the vehicle 10. Responsive to the force F, the middle horizontal cord 155H and the middle vertical cord 155V will flex in the direction of the force F, i.e. along the longitudinal axis L towards the passenger compartment of the vehicle 10. The prior art barrier net 50 is, at its four corners, anchored to the vehicle 10 by the upper and lower fastening means 110L, 110R, 120L, 120R. The cords 155H, 155V are flexible in that they may bend along their longitudinal axis of the cords 155H, 155V, but they are comparably stiff when it comes to stretching along the longitudinal axis of the cords 155H, 155V. Compare this to a rope that may be bent but is comparably difficult to stretch as opposed to a rubber band that is elastic also in its longitudinal extension. As there is some flexibility in the longitudinal direction of the cords 155H, 155V, the outer horizontal cords 155H and the outer vertical cords 155V will stretch towards a point of impact of the force F. Consequently, the prior art barrier net 50 will bulge along the longitudinal axis L of the vehicle 10.

The bulging of the prior art barrier net 50 is illustrated in Fig. 2c. Fig. 2c illustrates the prior art barrier net 50 with the force F as shown in Fig. 2b, but rotated 90° about the vertical axis V of the vehicle 10 away from the longitudinal axis L of the vehicle 10. In other words, the view of Fig. 2c is looking through a side window at a right side of the vehicle 10. As seen in Fig. 2c, responsive to the force F, the prior art barrier net 50 is extended a prior art forward extension length ΔLp.

The forward extension length is key parameter when designing a barrier net. There are strict regulations, e.g. ECE R17/ISO 27955-2010, controlling how much forward deflection, i.e. forward extensions, that is allowed and these regulations impose stringent requirements on a barrier net. Generally, the cords of barrier nets have to be made thicker in order to increase their longitudinal stiffness, i.e. increase the force required to stretch them. However, thicker cords are more expensive and will increase the material thereby blocking a rear view of the vehicle 10. Making the cords stiffer when it comes to bending may reduce their ability to stretch. However, a stiffer cord is probe to breaking and increasing the stiffness too much will cause the barrier net to be frail and probe to crack. These problems are addressed by embodiments of the barrier net of the present disclosure.

The inventors behind the present disclosure have realized that one reason for the prior art barrier net 50 having a comparably long forward extension length ΔLp, is that the forward extension length ΔLp will be a sum of the longitudinal extensions of both the middle center horizontal and vertical cords 155H, 155V and the outer horizontal and vertical cords 155H, 155V. In the simplified view of Fig. 2b, this means that the longitudinal extension of a total of six cords 155H, 155V, are added resulting in the forward extension length ΔLp shown in Fig. 2c. The inventors further realized that by reducing the number of cords contributing to the forward extension of the barrier net, the forward extension of the barrier net is reduced.

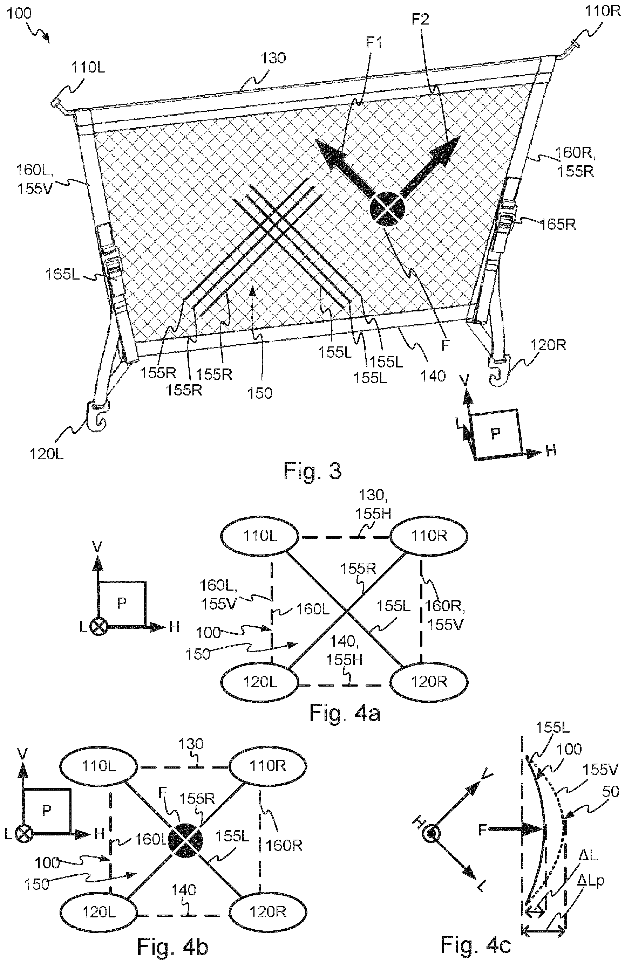

With reference to Fig. 3, a barrier net 100 according to one embodiment of the present invention will be presented. The barrier net 100 is suitable for separating a cargo area of a vehicle 10 from a passenger compartment of the vehicle 10, but it may be used also between e.g. a driver compartment from the passenger compartment of the vehicle 10. Consequently, the barrier net 100 is configured to be mounted vertically in the vehicle 10, extending from an (vertically) upper region of the vehicle 10 to a (vertically) lower region of the vehicle 10. Further to this, when mounted in the vehicle 10, the barrier net 100 extends from a (horizontally) left region of the vehicle 10 to a (horizontally) right region of the vehicle 10. The barrier net 100 is, when mounted in the vehicle 10, substantially planar along a plane P of the barrier net 100 described by a horizontal axis H and a vertical axis V of the vehicle 10, these are also the horizontal axis H and the vertical axis V of the barrier net 100 when the barrier net 100 is mounted in the vehicle 10. The barrier net 100 is shown from the cargo area of the vehicle 10 looking along a longitudinal axis L of the vehicle 10 when standing slightly to the right and above the longitudinal and vertical center of the vehicle 10. This is illustrated by the perspective view of the coordinate axis shown in Fig. 3.

The barrier net 100 is preferably configured to be mounted perpendicularly to a longitudinal extension of the vehicle 10. However, the teachings of the present disclosure are equally applicable to barrier nets 100 configured to be mounted at an angle to the longitudinal axis L of the vehicle 10.

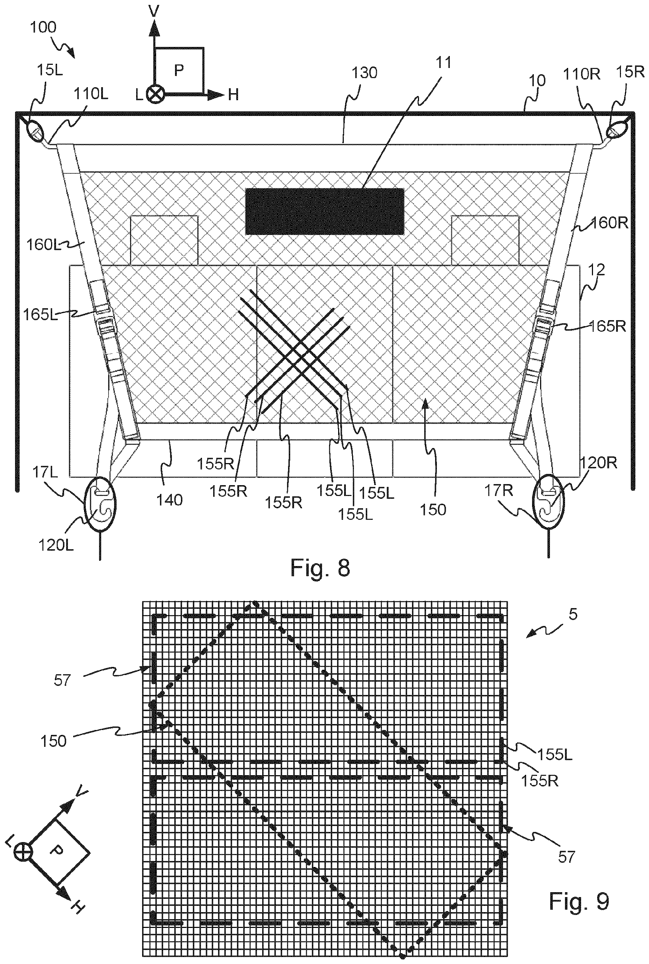

The barrier net 100 preferably comprises an upper left fastening means 110L and an upper right fastening means 110R for fastening the barrier net 100 at the (vertically) upper region of the vehicle 10. Generally, the fastening means 110L, 110R are configured to engage with matching upper fastening means 15L, 15R (see Fig. 8) of the vehicle 10. The upper fastening means 15L, 15R of the vehicle 10 may be connected to an inner ceiling of the vehicle 10, an upper section of the inner walls of the vehicle 10, or a section of the vehicle 10 where the inner walls meet the ceiling. The barrier net 100 may further optionally comprise one or more lower fastening means 120L 120R for fastening the barrier net at a (vertically) lower region of the vehicle 19. The embodiment of Fig. 3 is illustrated with a lower left fastening means 120L at a lower left corner of the barrier net 100 and a lower right fastening means 120R at the lower right corner of the barrier net 100. These fastening means 120L, 120R are provided for fastening the barrier net 100 at the (vertically) lower region of the vehicle 10. Generally, the fastening means 120L, 120R are configured to engage with matching lower fastening means 17L, 17R (see Fig. 8) of the vehicle 10. The lower fastening means 17L, 17R of the vehicle 10 may be connected to a floor of the vehicle 10, to a back of seat 12 (see Fig. 8) a lower section of the inner walls of the vehicle 10, a section of the vehicle 10 where the inner walls meet the floor, etc. In some embodiments, the barrier net 100 may be configured with a weigh element ensuring that the mesh 150 is vertically taut when the barrier net 100 is mounted in the vehicle 10. This weight element may be used instead of, or in combination with the lower fastening means 120R, 120L. In some embodiments, the barrier net 100 comprises only one lower fastening means (not shown) which preferably is mounted centrally on the barrier net 100 along the horizontal axis H of the barrier net 100 when mounted in the vehicle 10. The barrier net 100 of this embodiment preferably comprises a rigid element attached at the lower edge of the mesh 150 such that a vertically downward force from the single lower fastening means is spread across the lower edge of the mesh 150 by the rigid element.

The barrier net 100 further comprises a first plurality of cords 155L and a second plurality of cords 155R. For simplicity, in Fig. 3, only a few of the plurality of cords 155L, 155R are marked and indexed. Compared to the prior art barrier net 50 of Fig. 1, at least one of the first plurality of cords 155L and the second plurality of cords 155R is angled toward the upper fastening means 110L, 110R. In the prior art barrier net 50, the vertical cords 155V are substantially vertical extending along the vertical axis V of the vehicle 10 and the horizontal cords 155H are substantially horizontal extending along the horizontal axis H of the vehicle 10.

In one embodiment of the barrier net 100 of the present invention, the first plurality of cords 155L are angled towards the upper left fastening means 110L and the second plurality of cords 155R are extending substantially parallel to the vertical axis V or the horizontal axis H of the vehicle 10.

In another embodiment of the barrier net 100 of the present invention, the second plurality of cords 155R are angled towards the upper right fastening means 110R and the first plurality of cords 155L are extending substantially parallel to the vertical axis V or the horizontal axis H of the vehicle 10.

In a preferred embodiment, the first plurality of cords 155L are angled towards the upper left fastening means 110L and the second plurality of cords 155R are angled towards the upper right fastening means 110R. This is the configuration illustrated in Fig. 3.

The barrier net 100 in Fig. 3 is illustrated with optional edge elements 130, 140, 160L, 160R arranged at the edges of the mesh 150. The barrier net 100 is provided with an upper edge element 130 arranged at an (vertically) upper edge of the mesh 150. The upper edge element 130 is preferably arranged between the upper fastening means 110L, 110R. The barrier net 100 may further be provided with a lower edge element 140 arranged at a (vertically) lower edge of the mesh 150. The barrier net 100 may further be provided with a left edge element 160L and/or a right edge element 160R arranged at respective horizontal right or left side of the mesh 150. If both the left edge element 160L and the right edge element 160R are present, they may be described as sandwiching the mesh 150. The edge elements 130, 140, 160L, 160R are, if present, preferably configured such that they have a lower longitudinal elasticity than the cords 155L, 155R. This may be provided by forming the edge elements 130, 140, 160L, 160R from a belt material similar to that used in seat belts. The edge elements 130, 140, 160L, 160R may be formed by weaving a plurality of cords from a material similar to that of the first or second cords 155L, 155R. If present, the edge elements 130, 140, 160L, 160R are preferably fixed to each of the cords 155L, 155R having an end at the edge element 130, 140, 160L, 160R. In some embodiments, the upper and/or lower edge elements 130, 140 may be formed from horizontal cords 155H and/or the left and right edge element 160L, 160R may be formed from vertical cords 155V.

The embodiment of the barrier net 100 shown in Fig. 3 further comprises a left tensioning means 165L comprised in the left edge element 160L and a right tensioning means 165R comprised in the right edge element 160R. Other embodiments with only one tensioning means are also to be considered part of the present disclosure. In some embodiments, the upper edge element 130 and/or the lower edge element 140 comprises a tensioning means (not shown). The tensioning means 160L, 160R are configured to tense the associated edge element 130, 140, 160L, 160R between fastening means 110, 110R, 120L 120R of the barrier net 100. This ensures a taut and tensed installation of the barrier net 100 in the vehicle 10 allowing the same barrier net 100 to be used with vehicles having different inner vertical and horizontal dimensions.

In either of the presented embodiments, the first plurality of cords 155L and the second plurality of cords 155R are arranged to form a mesh 150. This means that at least some of the cords of the first plurality of cords 155L are spaced apart and that at least some of the cords of the second plurality of cords 155R are spaced apart. When the first plurality of cords 155L is placed in substantially the same plane P as the second plurality of cords 155R, they form a mesh 150 in the plane P. The mesh 150 may be described as e.g. a net, a web, a cobweb etc. of the barrier net 100. Regardless of the naming, the first plurality of cords 155L and the second plurality of cords 155R intersect to form a netting portion, i.e. the mesh 150, of the barrier net 100.

The angling of the first plurality of cords 155L and/or the second plurality of cords 155R will direct components of a force F applied to the mesh 150 along the pluralities of cords 155L, 155R towards the upper fastening means 100L, 110R. A force F subjected to the mesh 150 will be split into at least a first component F1 directed towards the upper left fastening means 110L primarily by the first plurality of cords 155L and a second component F2 of the force F is directed towards the upper right fastening means 110R primarily by the second plurality of cords 155R. The skilled person will appreciate that this is a simplification and that components of the force F in at least opposite directions to the first component F1 and the second component F2 will also manifest themselves.

In Fig. 4a, a simplified embodiment of a barrier net 100 according to the present invention is shown. Fig. 4a shows the barrier net 100 when it is mounted on the vehicle 10 and is viewed from the back of the vehicle 10 looking along the longitudinal axis L into the passenger compartment of the vehicle 10. In this embodiment, the barrier net 100 comprises one first cord 155L and one second cord 155R and is attached to the vehicle 10 at its corners by an upper left fastening means 11 0L, an upper right fastening means 11 0R, a lower left fastening means 120L and a lower right fastening means 120R. In this, perfectly valid although simplified embodiment, the barrier net 100 is substantially quadratic and the first cord 155L is arranged directly between the upper left fastening means 110L and the lower right fastening means 120R. Correspondingly, the second cord 155R is arranged between the upper right fastening means 110R and the lower left fastening means 120L. In this embodiments, the first (plurality of) cord(s) 155L and the second (plurality of) cord(s) 155R are arranged at substantially 45° to the horizontal axis H and the vertical axis V of the vehicle 10. The first (plurality of) cord(s) 155L and the second (plurality of) cord(s) 155R intersect at an angle of substantially 90°.

In Fig. 4b, the same view of the barrier net 100 is presented as in Fig. 4a but in Fig. 4b the mesh 150 is subjected to a force F perpendicular to the plane P of the mesh 150, i.e. along the longitudinal axis L towards the passenger compartment of the vehicle 10. Responsive to the force F, the first cord 155L and the second cords 155H will flex in the direction of the force F, i.e. along the longitudinal axis L towards the passenger compartment of the vehicle 10. As in Fig. 4a, the barrier net 100 is anchored to the vehicle 10 by the upper and lower fastening means 110L, 110R, 120L, 120R. As with the prior art barrier net 50, the cords 155L, 155R are flexible in that they may bend along the longitudinal axis of the cords 155L, 155R, but they are comparably stiff when it comes to stretching along the longitudinal axis of the cords 155R, 155L. It may be assumed that the cords 155L, 155R of the barrier net 100 in Figs. 4a-c are the same but arranged differently compared to the cords 155H, 155V of Figs. 2a-c. As there is some flexibility in the longitudinal direction of the cords 155L, 155R, the cords 155L, 155R will stretch towards a point of impact of the force F. Consequently, the barrier net 100 will bulge along the longitudinal axis L of the vehicle 10. However, as it is only the cords 155L, 155R directly subjected to the force F that will stretch, the longitudinal bulging of the barrier net 100 will be shorter compared to the prior art.

In Fig. 4c, a forward extension length ΔL of the barrier net 100 is illustrated with the corresponding prior art forward extension length ΔLp of the prior art barrier 50 illustrated as a dashed line for reference. As seen in Fig. 4c, the forward extension length ΔL of the barrier net 100 according to embodiments of the present invention is greatly reduced compared to the prior art barrier net 50 of Figs. 2a-c.

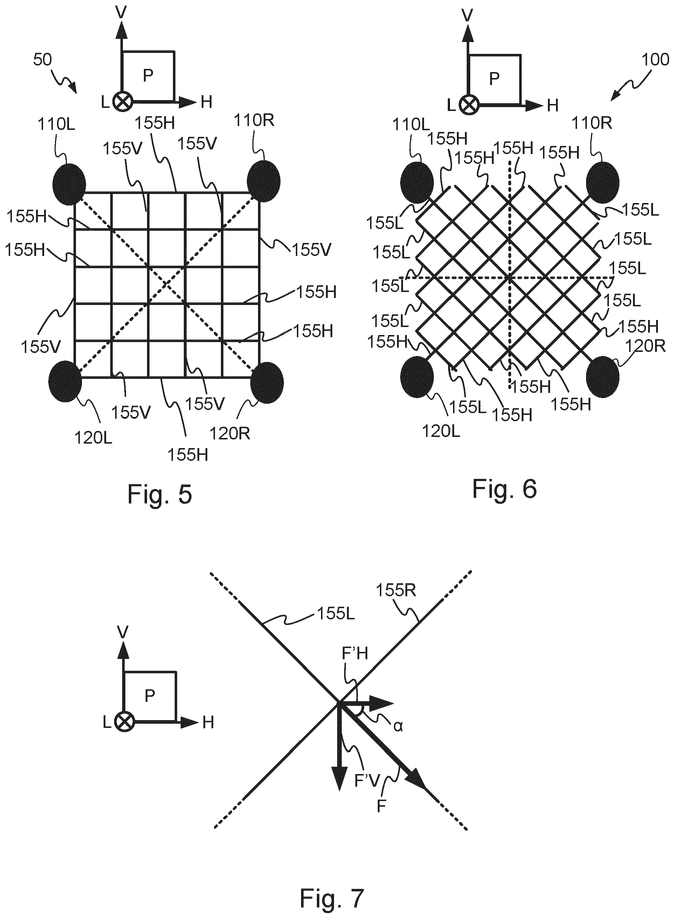

As previously mentioned, the illustrations of Figs. 2a-c and 4a-c are extreme simplifications but explanatory in understanding the workings of the present invention. In real life applications, barrier nets 100 with only two cords 155L, 155R are unlikely, but the effect of the angled cords 155L, 155R remain even if more cords are utilized. This will be explained with reference to Figs. 5 and 6.

Starting with Fig. 5, a sectional view of the mesh 57 of the prior art barrier net 50 is shown. The barrier net is fastened the vehicle 10 at corners of the mesh 57 by the upper and lower fastening means 110L, 110R, 120L, 120R. The mesh 57 may be described as a plurality of rectangles, e.g. diamonds, rhombs etc., formed by the intersection of the plurality of horizontal cords 155H with the plurality of vertical cords 155V. As the rectangles are formed from the longitudinally comparably stiff cords 155H, 155V, they are comparably stiff to deformation along their edges, i.e. along the vertical axis V and the horizontal axis H. However, as they are cords 155H, 155V, they are comparably elastic when it comes to bending, and the rectangles are susceptible to deformation along their diagonals. In Fig. 5, this means that the rectangles are most susceptible to deformation along the diagonal dotted lines, one extending from the upper left fastening means 110L to the lower right fastening means 120R and another from the upper right fastening means 110R to the lower left fastening means 120L. When the prior art barrier net 50 is subjected to a force (not shown in Fig. 5) perpendicular to the plane P of the prior art barrier net 50, this force must be transferred to the fastening means 110L, 110R, 120L, 120R which means along the diagonals shown in Fig. 5. Consequently, from this perspective, the prior art barrier net 50 is configured for maximum forward extension length ΔLp.

Turning to Fig. 6, a barrier net 100 according to embodiments of the present invention is shown. The barrier net 100 is arranged analogously to the prior art barrier net 50 of Fig. 5 and is consequently fastened the vehicle 10 at corners of the mesh 150 by the upper and lower fastening means 110L, 110R, 120L, 120R. The mesh 150 of the barrier net 100 may be described as a plurality of rectangles, e.g. diamonds, rhombs etc., formed by the intersection of the first plurality of cords 155L with the second plurality of cords 155R. As the rectangles are formed from the longitudinally comparably stiff cords 155L, 155R, they are comparably stiff to deformation along their edges. However, as the cords 155H, 155V are comparably elastic when it comes to bending, the rectangles are susceptible to deformation along their diagonals, i.e. along the vertical axis V and the horizontal axis H of the vehicle illustrated by dotted lines in Fig. 6. When the barrier net 100 is subjected to a force (not shown in Fig. 6) perpendicular to the plane P of the barrier net 100, this force must be transferred to the fastening means 110L, 110R, 120L, 120R which means along the first and second plurality of cords 155L, 55R. Consequently, from this perspective, the barrier net 50 is configured for minimum forward extension length ΔL.

The examples of Figs. 5 and 6 are given with substantially quadratic meshes 57, 150 and a 90° angle of intersection between the cords 155V, 155V, 155L, 155R. However, the skilled person will understand that forces acting along the cords 155L, 155R of the barrier net 100 when the shape of the mesh 150 is different and/or the intercepting angle between the cords 155L, 155R is different also will have a shortened forward extension compared to the prior art barrier net 50 due to the angle giving rise to a vertical and/or a horizontal component of the force F. This will be briefly explained with reference to Fig. 7.

Fig. 7 is a partial view only showing one first cord 155L and one second cord 155R of the barrier net 100 according. The first cord 155L is arranged with an angle α to the horizontal axis H. As the first cord 155L is subjected to a force F along its longitudinal extension, this force F may be describes as composed of a vertical component F'V along the vertical axis V and a horizontal component F'H along the horizontal axis H. The vertical component F'V will give rise to vertical deformation of the rectangles of the mesh 150 and the horizontal component F'H will give rise to horizontal deformation of the mesh 150. The horizontal component F'H may be calculated as *F'H* = *F* · cos(*α*) and the vertical component F'V as *F'V* = *F* · sin(*α*). This means that the force F will be divided between horizontal and vertical deformation resulting in a reduced total deformation.

In the prior art barrier net 50 the angle α is substantially 90° which maximizes either the horizontal component F'H or the vertical component F'V depending on if the force is subjected to the horizontal cord 155H or the vertical cord 155V.

Consequently, the cords 155L, 155R of the barrier net 100 may be thinner and thereby cheaper compared to the cords 155H, 155v of the prior art barrier net 50 without increasing the forward extension when subjected to a specific load.

In Fig. 8, a view of the barrier net 100 when it is mounted in the vehicle is illustrated looking along the longitudinal axis L of the vehicle 10 through the cargo area 10 into the passenger compartment. In Fig. 8, a load 11 is displaced and caught by mesh 150 of the barrier net 100. This may be caused by the vehicle de-accelerating, i.e. breaking, which cause the load 11 to move forward along the longitudinal axis L. The vehicle 10 in Fig. 8 is shown comprising seats 12 and the barrier net 100 is arranged adjacent to and behind the seats 12 along the longitudinal axis L. As the load 11 pushes on the barrier net 100, the mesh 150 will bulge between an upper edge of the seats 12 and the upper edge element 130. This means that a portion of a force from the load 11 will be subjected longitudinally along the upper edge of the seat 12, i.e. horizontally along the mesh 150 of the barrier net 100 at the upper edge of the seats 12. The force along the seat 12 would, in a prior art barrier net 50, increase a risk of the mesh 50 tearing. In the mesh 150 according to embodiments of the invention, the force along the seat 12 will act at an angle to the first plurality of cords 155L and the second plurality of cords 155R. As a result, the risk of the mesh 150 tearing is significantly reduced compared to the prior art mesh 50. Compare this to normal woven fabric for clothing, tearing the fabric along the strands of the fabric is generally possible as this will split the fabric between the cords only breaking half the cords. However, tearing the fabric diagonally to the cords of the fabric is close to impossible as all cords have to be broken. Diagonal incisions of a fabric tend to require cutting.

In one embodiment, the mesh 150 is formed by the weaving the first plurality of cords 155L with the second plurality of cords 155R. This is beneficial as the woven mesh has fabric like features and is less prone to tearing in directions not being substantially parallel to either the first plurality of cords 155L or the second plurality of cords 155R. This effect is not specific to woven intersections between the first plurality of cords 155L and the second plurality of cords 155R, but may be provided also with other methods of forming the mesh 150.

It should be mentioned that a mesh formed by weaving or knitting, with technology known to date, results in a substantially square mesh with the cords 155L, 155R intersecting the edges of the mesh at right angles. This is shown in Fig. 9, wherein a large mesh 5 is shown formed by a first plurality of cords 155L intersecting a second plurality of cords 155R. From the large mesh 5, it is possible to directly form about two prior art meshes 57 (dashed squares in Fig. 9) by cutting the large mesh 5 (substantially in half) along either of the first plurality of cords 155L or the second plurality of cords 155R. In order to form the mesh 150 according to the present disclosure (dotted line in Fig. 9), a cut has to be angled with regards to the first plurality of cords 155L and the second plurality of cords 155R. The mesh 150 according to the present disclosure will therefore produce waste material at the corners of the large mesh 5. As a consequence, when starting from the same large mesh 5, a cost of material for the mesh 150 according to the invention will be higher compared to the prior art mesh 57. The inventors behind the present disclosure thought beyond this technical prejudice and realized that the mesh 150 according to the disclosure may be formed by thinner cords 155R, 155L which at least reduced the difference in cost of material for the mesh 150 according to the disclosure compared to the prior art mesh 57.

Also, from Fig. 9, it is evident that the angled mesh 150 extends at an angle α into the edge elements 130, 140, 160L, 160R. This angle α is generally substantially the same as the first angle α as previously described as the angle the first plurality of cords 155L and/or the second plurality of cords 155H are configured to form, when the barrier net 100 is mounted in the vehicle 10, to the horizontal extension axis H of the barrier net 100. The first plurality of cords 155L and/or the second plurality of cords 155H may extend into any, all or some edge elements 130, 140, 160L, 160R at the first angle α. As the skilled person appreciates, the angle α with which the first plurality of cords 155L and/or the second plurality of cords 155H extend into the upper and lower edge elements 130, 140 is only the same as the angle to the left and right edge elements 160L, 160R if the first plurality of cords 155L and/or the second plurality of cords 155H intersect at 45 degrees and the barrier net 100 is formed with right angles. However, from a specification that the first plurality of cords 155L and/or the second plurality of cords 155R extend into the upper edge element 130 at a first angle α, the skilled person is well aware of how to determine angles with which the first plurality of cords 155L and/or the second plurality of cords 155R extend into any other edge elements 140, 160L, 160R. As before, the first angle α is smaller or larger than 90 degrees. Preferably the first angle α is between 70 and 20 degrees, more preferably between 60 and 30 degrees and most preferably between 50 and 40 degrees.

The angled mesh 150 as taught within the present disclosure has further benefits compared to the prior art mesh 57. The deviation from the substantially horizontal and vertical cords 155H, 155V of the prior art mesh 57 makes the barrier net 100 less obstructing for the rear view of vehicle 10. Our world is formed from generally horizontal and vertical lines, e.g. horizons, trees, buildings, light posts etc. and our minds are very good at observing these. The angled cords 155L of 155H according to embodiments of the present invention are easier for our brains to ignore and consequently the barrier net 100 of the present disclosure will be experienced as more transparent than the prior art.

It should be mentioned that dimensions and geometrical relations are, if nothing else is stated or obvious from the context, related to the coordinate system of the vehicle 10. When the barrier net is mounted in the vehicle 10, the coordinate system of the barrier net is the same as coordinate system of the vehicle. In other words, references are generally made to the barrier net 100 when it is mounted in a vehicle 10 if nothing else is stated.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while embodiments of the invention have been described with reference to barrier nets of vehicles, persons skilled in the art will appreciate that the embodiments of the invention can equivalently be applied to other forms of netting where forward deflection needs to be considered. Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A barrier net (100) for separating a cargo area of a vehicle (10) from a passenger compartment of the vehicle (10), the barrier net (100) comprising:
an upper left fastening means (110L) and an upper right fastening means (110R) for fastening the barrier net (100) at an upper region of the vehicle (10),
lower fastening means (120L, 120R) for fastening the barrier net (100) at a lower region of the vehicle (10),
an upper edge element (130) connected between the upper left fastening means (110L) and the upper right fastening means (110R),
a first plurality of cords (155L) angled towards the upper left fastening means (110L) and a second plurality of cords (155R) angled towards the upper right fastening means (1 10R), the first plurality of cords (155L) is arranged to form a mesh (150) by intersecting the second plurality of cords (155R), wherein an upper edge of the mesh (150) is fixed to the upper edge element (130) such that, when the mesh (150) is subjected to a force (F) perpendicular to a plane (P) of the mesh (150), a first component (F1) of the force (F) is directed towards the upper left fastening means (110L) primarily by the first plurality of cords (155L) and a second component (F2) of the force (F) is directed towards the upper right fastening means (110R) primarily by the second plurality of cords (155R).

2. the barrier net (100) of claim 1, wherein the first plurality of cords (155L) and/or the second plurality of cords (155R) extend into the upper edge element (130) at a first angle (α), wherein the first angle (α) is between 70 and 20 degrees, preferably between 60 and 30 degrees and most preferably between 50 and 40 degrees.

3. The barrier net (100) of claim 1 or 2, wherein the first plurality of cords (155L) is fixed to the second plurality of cords (155H) at each intersection between the first plurality of cords (155L) and the second plurality of cords (155H).

4. The barrier net (100) of any one of the preceding claims, comprising a lower left fastening means (120L) and a lower right fastening means (120R) for fastening the barrier net (100) at a lower region of the vehicle (10).

5. The barrier net (100) of claim 4, wherein the lower left fastening means (120L) is arranged at a lower left corner of the barrier net (100) and the lower right fastening means (120R) is arranged at a lower right corner of the barrier net (100).

6. The barrier net (100) of any one of the preceding claims, wherein the upper left fastening means (110L) is arranged at an upper left corner of the barrier net (100) and the upper right fastening means (110R) is arranged at an upper right corner of the barrier net (100) when the barrier net (100) is mounted in the vehicle (10).

7. The barrier net (100) of claims 5 and 6, wherein the barrier net (100) is a rectangular barrier net (100) configured to be fastened to the vehicle (10) at each of the corners of the barrier net (100).

8. The barrier net (100) of any one of the preceding claims, further comprising a lower edge element (140) and fixed to a lower edge of the mesh (150).

9. The barrier net (100) of any one of the preceding claims, further comprising a left edge element (160L) and right edge element (160R) arranged to fixedly sandwich the mesh (150) at outer edges of the mesh (150) along, when the barrier net (100) is mounted in the vehicle (10), a vertical extension axis (V) of the barrier net (100).

10. The barrier net of any one of claims 8 or 9, wherein at least one of the upper edge element (130), the lower edge element (140), or the left edge element (160L) or the right edge element (160R) is flexible with regards to bending and comparably stiff with regards to stretching.

11. The barrier net (100) of any one of the preceding claims, wherein the first plurality of cords (155L) and the second plurality of cords are flexible with regards to bending and comparably stiff with regards to stretching.

12. The barrier net (100) of any one of the preceding claims, wherein the first plurality of cords (155L) intersect the second plurality of cords (155R) at an angle between 65 and 115 degrees, preferably between 80 and 100 degrees.

13. The barrier net (100) of any one of the preceding claims, wherein the first plurality of cords (155L) and/or the second plurality of cords (155H) are configured to, when the barrier net (100) is mounted in the vehicle (10), form a first angle (α) to the horizontal extension axis (H) of the barrier net (100), wherein the first angle (α) is between 70 and 20 degrees, preferably between 60 and 30 degrees and most preferably between 50 and 40 degrees.

14. The barrier net (100) of any one of the preceding claims, wherein the mesh (150) is processed to increase the rigidity of the mesh (150).

15. The barrier net (100) of any one of the preceding claims, wherein the barrier net (100) is a foldable barrier net (100).
